# FASCICULE DE BREVET EUROPEEN

(11) **EP 2 941 590 B1**
(45) Date de publication et mention de la délivrance du brevet: **15.08.2018**
(21) Numéro de dépôt: 13818351.2
(22) Date de dépôt: 18.12.2013
(51) Int. Cl.: F21V 8/00

(54) **DISPOSITIF D'ÉCLAIRAGE À ECRAN À BORD(S) LUMINEUX**
BELEUCHTUNGSVORRICHTUNG MIT EINEM SCHIRM MIT EINER ODER MEHREREN LEUCHTENDEN KANTEN
ILLUMINATING DEVICE COMPRISING A SCREEN HAVING ONE OR MORE LUMINOUS EDGES

(30) Priorité: 03.01.2013 FR 1350025
(43) Date de publication de la demande: 11.11.2015
(73) Titulaire: PSA Automobiles SA, 78300 Poissy (FR)
(72) Inventeur: VIDEIRA, Filipe, F-78140 Velizy Villacoublay (FR); CARROUGET, Alain, F-28700 Levainville (FR); MOYNIER, Gilles, F-72190 Sarge Les Le Mans (FR)
(86) Numéro de dépôt international: PCT/FR2013/053170
(87) Numéro de publication internationale: WO 2014/106706

(56) Documents cités:
- EP-A1- 0 732 679
- EP-A1- 1 139 015
- US-A1- 2008 232 137
- US-A1- 2010 008 103

## Description

La présente invention revendique la priorité de la demande française 1350025 déposée le 3 janvier 2013 dont le contenu (texte, dessins et revendications) est ici incorporé par référence.

L'invention concerne les dispositifs d'éclairage qui comportent au moins un écran translucide couplé à au moins une source de lumière.

On entend ici par « dispositif d'éclairage » un dispositif lumineux pouvant assurer une fonction d'éclairage ou de signalisation, et/ou un effet lumineux décoratif, et/ou une fonction de transfert de lumière.

Dans certains domaines, comme par exemple celui des véhicules, éventuellement de type automobile, il a été proposé d'utiliser, par exemple au sein d'un bloc optique, au moins un écran translucide chargé de véhiculer par guidage interne jusqu'à un endroit choisi les photons qui sont produits par au moins une source de lumière. Le guidage interne résulte de réflexions totales des photons sur des faces internes de l'écran. L'endroit choisi est un lieu où les photons sont transférés vers l'extérieur afin de remplir au moins partiellement une fonction photométrique ou de transfert de lumière et/ou d'assurer un effet de style lumineux.

Par exemple, l'écran peut comprendre une face arrière munie de structures tridimensionnelles chargées de transférer les photons, issus d'une face latérale (« par la tranche »), vers sa face avant, suivant une direction générale prédéfinie, afin que cette face avant semble entièrement illuminée (ou éclairée par l'arrière). Un tel écran constitue alors ce que l'homme de l'art appelle généralement un « rideau de lumière ». L'inconvénient principal de ce type d'écran réside dans le fait que la face avant est intégralement illuminée, ce qui n'offre pas de diversité, notamment en termes de formes et d'effets de style, et que cette illumination présente une faible intensité du fait de la répartition des photons sur une surface importante.

Un tel écran est notamment connu du document US2008/232137A1. Les documents EP 0 732 679 A1 et US 2010/0008103 A1 divulguent des bloc optiques éclairés par les bords. Dans un autre exemple, l'écran peut être chargé de transférer des photons de l'une de ses faces latérales (dite face d'entrée) vers une autre de ses faces latérales (dite face de sortie), sans que ses faces avant et arrière ne semblent éclairées. Un tel écran constitue alors ce que l'homme de l'art appelle généralement un « guide plat ». L'inconvénient principal de ce type d'écran réside dans le fait qu'il est longiligne, de faible hauteur, et que seule la face de sortie est intégralement illuminée, ce qui n'offre pas beaucoup de diversité, notamment en termes de formes et d'effets de style. L'invention a donc pour but de proposer une solution alternative propre à améliorer la situation.

Elle propose notamment à cet effet un bloc optique pour véhicule automobile conforme à l'objet de la revendication 1.

Ainsi seul l'un au moins des bords de l'écran est désormais éclairé, et non plus l'intégralité de ce dernier, ce qui permet, notamment, d'offrir de la diversité en termes de formes et d'effets de style.

Le bloc optique selon l'invention peut comporter d'autres caractéristiques qui peuvent être prises séparément ou en combinaison, et notamment :
- lorsque son écran comprend deux bords latéraux reliés par deux bords de liaison, l'un au moins de ces bords latéraux peut comprendre sur sa face arrière des premières structures tridimensionnelles qui constituent des prismes propres à réfléchir totalement des photons selon une première direction générale sensiblement perpendiculaire à la face avant ;
- lorsque son écran comprend deux bords latéraux reliés par deux bords de liaison, l'un au moins de ces bords de liaison peut comprendre sur sa face arrière des premières structures tridimensionnelles qui constituent des godrons parallèles entre eux, sensiblement perpendiculaires à une ligne suivant laquelle s'étend ce bord de liaison, et inclinés vers sa face avant selon un angle aigu ;
   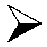 les godrons peuvent être des semi-cylindres circulaires ;
- chaque bord, ayant une face arrière munie de premières structures tridimensionnelles, peut comprendre en outre sur sa face avant des secondes structures tridimensionnelles qui sont propres à modifier la trajectoire de sortie de photons incidents en fonction du lieu où survient cette incidence ;
   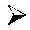 les secondes structures tridimensionnelles peuvent constituer des godrons sensiblement parallèles entre eux et à une ligne suivant laquelle s'étend le bord qui les comprend ;
      - les godrons peuvent être des semi-cylindres circulaires ;
- l'un des bords de liaison peut être dépourvu de premières structures tridimensionnelles et, d'une part, prolongé vers l'arrière par une paroi qui est propre à recevoir des photons de chaque source de lumière et à transférer vers lui ces photons reçus sensiblement selon une seconde direction générale, et, d'autre part, agencé de manière à réfléchir vers les bords latéraux ces photons transférés ;
   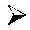 la paroi peut comprendre une extrémité opposée au bord de liaison qu'elle prolonge, inclinée et présentant au moins une zone ayant un profil parabolique propre à réfléchir totalement des photons, qui sont issus d'une source de lumière associée, vers ce bord de liaison selon la seconde direction générale.

L'invention propose également un bloc optique comprenant au moins un dispositif d'éclairage du type de celui présenté ci-avant.

L'invention peut par exemple être utilisée dans le domaine des véhicules, éventuellement de type automobile.

D'autres caractéristiques et avantages de l'invention apparaîtront à l'examen de la description détaillée ci-après, et des dessins annexés, sur lesquels :
- la figure 1 illustre schématiquement, dans une vue en perspective du côté avant, un exemple de réalisation d'un dispositif d'éclairage selon l'invention,
- la figure 2 illustre schématiquement, dans une vue en perspective du côté arrière, le dispositif d'éclairage de la figure 1,
- la figure 3 illustre schématiquement, dans une vue en perspective du côté avant, une partie d'un premier bord latéral de l'écran du dispositif d'éclairage de la figure 1,
- la figure 4 illustre schématiquement, dans une vue de côté, le dispositif d'éclairage de la figure 1, couplé à une paroi auxiliaire de masquage,
- la figure 5 illustre schématiquement, dans une vue en perspective du côté arrière, une partie d'un bord de liaison de l'écran du dispositif d'éclairage de la figure 1,
- la figure 6 illustre schématiquement, dans une vue en perspective du côté avant, une partie d'un bord de liaison de l'écran du dispositif d'éclairage de la figure 1, et
- la figure 7 illustre schématiquement, dans une vue du dessus, le dispositif d'éclairage de la figure 1.

L'invention a pour but de proposer un dispositif d'éclairage D permettant de remplir au moins partiellement une fonction photométrique (d'éclairage ou de signalisation) ou de transfert de lumière, et/ou autorisant plusieurs effets de style lumineux (éventuellement décoratifs).

Dans ce qui suit, on considère, à titre d'exemple non limitatif, que le dispositif d'éclairage D est destiné à faire partie d'un bloc optique (non représenté) d'un véhicule, éventuellement de type automobile. Mais l'invention n'est pas limitée à cette application. Un dispositif d'éclairage D, selon l'invention, peut en effet équiper tout type de système, équipement ou dispositif, y compris des murs intérieurs ou extérieurs de bâtiment (éventuellement en prévoyant des moyens d'étanchéité additionnels pour protéger l'électronique associée).

On notera que le bloc optique peut être aussi bien un phare (ou projecteur avant), qu'un feu arrière. A titre d'exemple non limitatif, un dispositif d'éclairage D peut assurer, ou participer à, une fonction de feu diurne (ou DRL (pour « Daytime running Light (or Lamp) » - signalisation lumineuse allumée automatiquement lorsque le véhicule est mis en fonctionnement)).

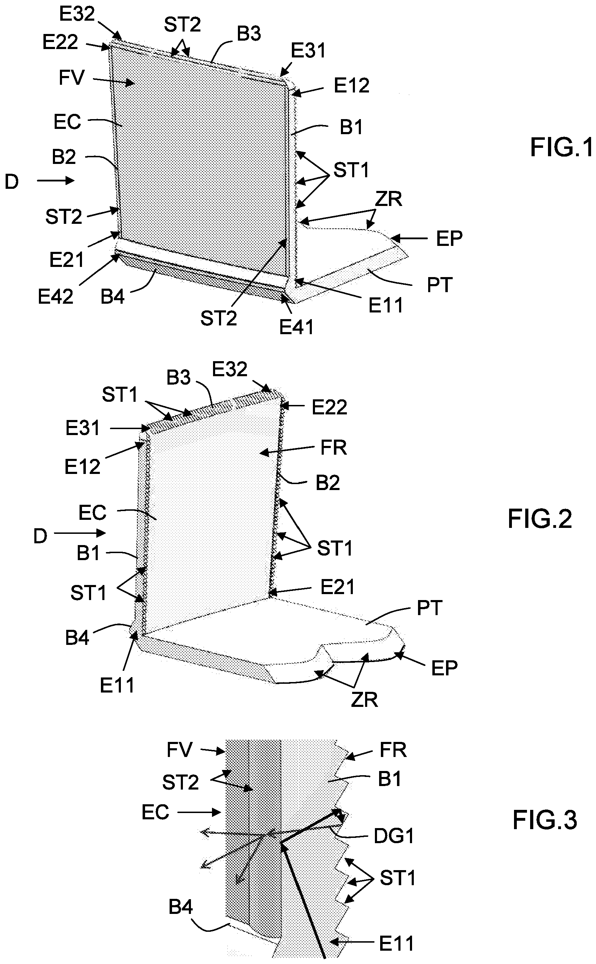

On a schématiquement illustré sur les figures 1 à 7 un exemple de réalisation, non limitatif, d'un dispositif d'éclairage D selon l'invention.

Comme illustré, un dispositif d'éclairage D, selon l'invention, comprend au moins un écran translucide EC et au moins une source de lumière Sk.

L'écran EC peut être réalisé en matière plastique ou en verre, par exemple par moulage. Il est délimité par des bords Bj. Dans l'exemple illustré (voir figures 1 et 2), le dispositif d'éclairage D comprend deux bords latéraux B1 et B2 et deux bords de liaison B3 et B4, munis chacun de deux extrémités opposées Eji.

Le premier bord latéral B1 (j = 1) comprend des première E11 (i = 1) et seconde E12 (i = 2) extrémités opposées.

Le second bord latéral B2 (j = 2) comprend des première E21 (i = 1) et seconde E22 (i = 2) extrémités opposées.

Le premier bord de liaison B3 (j = 3) comprend des première E31 (i = 1) et seconde E32 (i = 2) extrémités opposées. La première extrémité E31 du premier bord de liaison B3 est solidarisée à la seconde extrémité E12 du premier bord latéral B1. La seconde extrémité E32 du premier bord de liaison B3 est solidarisée à la seconde extrémité E22 du second bord latéral B2.

Le second bord de liaison B4 (j = 4) comprend des première E41 (i = 1) et seconde E42 (i = 2) extrémités opposées. La première extrémité E41 du second bord de liaison B4 est solidarisée à la première extrémité E11 du premier bord latéral B1. La seconde extrémité E42 du second bord de liaison B4 est solidarisée à la première extrémité E21 du second bord latéral B2.

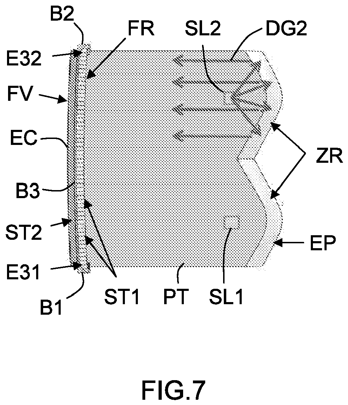

Dans l'exemple illustré (voir figure 7), le dispositif d'éclairage D comprend deux sources de lumière S1 et S2 (k = 1 ou 2), de manière à renforcer l'homogénéité et/ou l'intensité de l'éclairement assuré, et/ou à créer un effet de style. Mais il pourrait ne comporter qu'une seule source de lumière ou bien plus de deux sources de lumière.

Chaque source de lumière Sk peut comprendre au moins une diode électroluminescente (ou LED) ou une diode laser. Ces sources de lumière sont avantageuses car elles sont ponctuelles et délivrent les photons dans un cône.

On notera que lorsque l'on utilise des diodes électroluminescentes ou des diodes laser, il est avantageux qu'elles soient montées sur une plaque de support destinée à permettre au moins leur contrôle et leur alimentation électrique. Cette plaque de support peut par exemple être une carte à circuits imprimés, de type PCB (« Printed Circuit Board »), rigide ou flexible (« de type « Flex »).

Chaque diode électroluminescente ou diode laser Sk peut être agencée de manière à émettre une lumière blanche ou bien une lumière colorée. D'autre part, en présence d'au moins deux diodes électroluminescentes ou diodes laser Sk, ces dernières peuvent être agencées de manière à émettre des lumières de couleurs différentes ou bien identiques.

Dans l'exemple non limitatif illustré (voir figures 1, 2, 4 et 7), l'écran EC est prolongé vers l'arrière, au niveau de son second bord de liaison B4, par une paroi PT qui est agencée de manière à recevoir des photons de chaque source de lumière Sk et à transférer ces photons reçus vers ce second bord de liaison B4, sensiblement selon une seconde direction générale DG2. Ce transfert s'effectue par un guidage interne résultant de réflexions totales des photons sur les faces internes de la paroi PT. Comme illustré non limitativement, ce transfert peut être favorisé suivant la seconde direction générale DG2 grâce à l'existence d'une extrémité EP de la paroi PT qui est opposée au second bord de liaison B4 (prolongé vers l'arrière). Cette extrémité EP est inclinée et présente au moins une zone ZR ayant un profil curviligne, par exemple parabolique ou elliptique, propre à réfléchir totalement des photons, qui sont issus d'une source de lumière Sk associée, vers ce second bord de liaison B4 selon la seconde direction générale DG2. En variante, l'extrémité EP pourrait être sensiblement plane et les sources de lumière Sk pourraient être placées contre cette extrémité EP en vue d'une injection de photons par la tranche directement en direction du second bord de liaison B4.

On notera que la section en forme de « L » de l'écran EC est ici destinée à déporter et cacher les sources de lumière Sk, et donc à éviter l'apparition de « points chauds » lumineux. Par ailleurs, la paroi PT et l'écran EC peuvent constituer deux sous-parties d'un élément monobloc. Mais cela n'est pas obligatoire. En effet, la paroi PT pourrait être solidarisée fixement au second bord de liaison B4.

Chaque diode électroluminescente ou diode laser Sk peut être couplée à la paroi PT soit directement, par exemple par collage ou par enchâssement dans un orifice dédié, soit indirectement, par exemple via la plaque de support.

Dans l'exemple non limitatif illustré (voir figure 7), l'extrémité EP de la paroi PT comprend deux zones ZR associées respectivement aux deux sources de lumière Sk. Mais il pourrait n'en comporter qu'une seule, ou bien plus de deux.

On comprendra que dans l'exemple non limitatif illustré le second bord de liaison B4 est agencé de manière à réfléchir vers les bords latéraux B1 et B2 une partie des photons transférés par la paroi PT, et vers le premier bord de liaison B3, via la partie centrale de l'écran EC (par réflexions totales sur ses faces internes), la partie complémentaire des photons transférés par la paroi PT. Il comprend à cet effet une face avant constituée de sous-parties présentant des inclinaisons différentes adaptées à la réflexion précitée. Mais dans une variante de réalisation dépourvue de paroi PT, le second bord de liaison B4 pourrait être couplé à chaque source de lumière Sk et agencé de manière à introduire de façon appropriée dans les bords latéraux B1 et B2 les photons générés par chaque source de lumière Sk.

Selon l'invention, l'un au moins des bords Bj de l'écran EC comprend sur sa face arrière FR des premières structures tridimensionnelles ST1 qui sont propres à réfléchir totalement des photons, issus de l'une de ses extrémités Eji ou d'une partie centrale, vers sa face avant FV afin qu'ils sortent par ce bord Bj.

Ainsi, seul un bord Bj comprenant des premières structures tridimensionnelles ST1 sur sa face arrière FR apparaît comme éclairé ou illuminé sur sa face avant FV. On comprendra donc que le reste de la face avant FV de l'écran EC n'apparaît pas éclairé ou illuminé.

Dans l'exemple non limitatif illustré (voir figure 2), les premier B1 et second B2 bords latéraux et le premier bord de liaison B3 comprennent des premières structures tridimensionnelles ST1 sur leur face arrière FR et donc apparaissent comme éclairés ou illuminés sur leur face avant FV. Le second bord de liaison B4 ne comprend pas de premières structures tridimensionnelles ST1 sur sa face arrière FR du fait qu'il est prolongé vers l'arrière par la paroi PT et ne sert qu'à l'introduction des photons dans les premier B1 et second B2 bords latéraux.

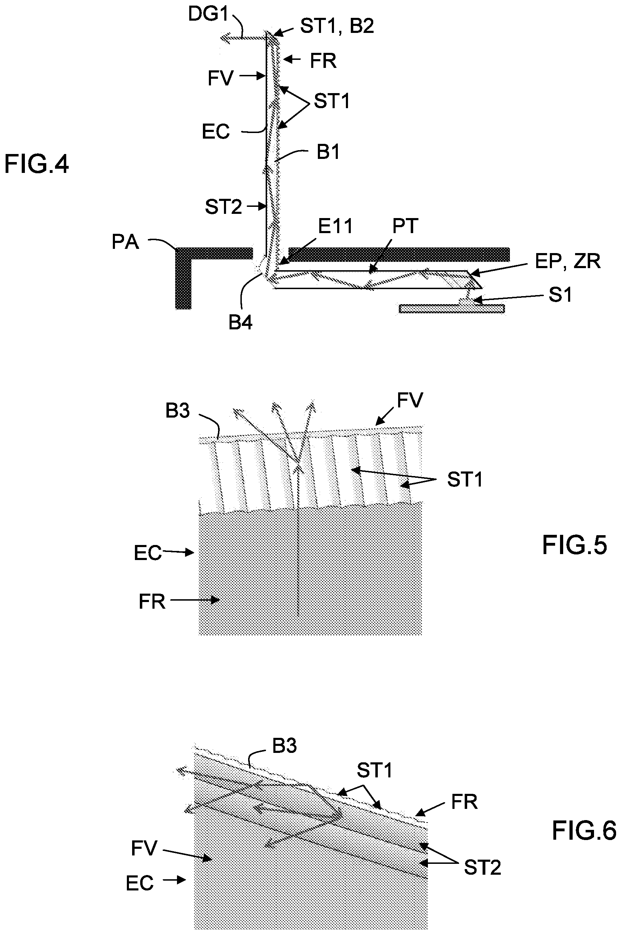

On notera que certains des photons sont introduits par le second bord de liaison B4 dans les premier B1 et second B2 bords latéraux via respectivement leurs premières extrémités E11 et E21, tandis que les autres photons sont introduits par le second bord de liaison B4 dans la partie centrale de l'écran EC et parviennent jusque dans la partie centrale du premier bord de liaison B3 (située entre ses extrémités E3i) par réflexions totales sur les faces internes de cette partie centrale de l'écran EC, comme illustré par les trajets fléchés de la figure 4.

Comme illustré sur les figures 2 et 3, les premières structures tridimensionnelles ST1 qui sont définies sur la face arrière FR d'un bord latéral B1 ou B2 peuvent, par exemple, constituer des prismes propres à réfléchir des photons vers la face avant FV selon une première direction générale DG1 qui est sensiblement perpendiculaire à cette face avant FV. Ces prismes ST1 sont en effet des structures 3D qui permettent la réalisation dans un très petit espace de réflexions multiples propres à diriger des photons incidents suivant sensiblement une même première direction générale DG1.

Par ailleurs, comme illustré sur les figures 2 et 5 à 7, les premières structures tridimensionnelles ST1 qui sont définies sur la face arrière FR d'un bord de liaison B3 peuvent, par exemple, constituer ce que l'homme de l'art appelle des godrons propres à réfléchir des photons vers la face avant FV selon des directions sensiblement contenues dans un plan perpendiculaire à leur axe de symétrie. Ils agissent donc comme des diffuseurs bidimensionnels (ou 2D).

Dans l'exemple illustré, les godrons ST1 sont parallèles entre eux, sensiblement perpendiculaires à la ligne suivant laquelle s'étend ce bord de liaison B3, et inclinés vers la face avant FV de ce dernier (B3) selon un angle aigu. On notera que la ligne est ici une droite « transversale ». Mais dans une variante de réalisation cette ligne pourrait présenter au moins une courbure.

Ces godrons ST1 peuvent être des semi-cylindres circulaires, comme illustré non limitativement sur la figure 5. Mais il pourrait s'agir de semi-cylindres elliptiques, par exemple.

On notera que les premières structures tridimensionnelles ST1 du premier bord de liaison B3 pourraient être des prismes, au lieu d'être des godrons.

On notera également, comme illustré non limitativement sur les figures 1, 3, 6 et 7, que chaque bord B1, B2 ou B3, ayant une face arrière FR munie de premières structures tridimensionnelles ST1, peut avantageusement comprendre sur sa face avant FV des secondes structures tridimensionnelles ST2 qui sont propres à modifier la trajectoire de sortie des photons incidents en fonction du lieu où survient cette incidence. Ce mécanisme est schématiquement illustré sur les figures 3 et 6. On comprendra en effet que si un photon incident atteint la face interne d'une structure tridimensionnelle ST2 sous un angle de 90°, il ne sera pas défléchi, tandis que si un photon incident atteint la face interne d'un godron sous un angle différent de 90°, il sera d'autant plus défléchi que la différence par rapport à 90° sera grande. Ce mécanisme de déflexion est destiné à donner l'impression que la zone éclairée ou illuminée est plus large que la largeur du bord Bj considéré.

Par exemple, et comme illustré non limitativement, ces secondes structures tridimensionnelles ST2 peuvent constituer des godrons sensiblement parallèles entre eux et à la ligne suivant laquelle s'étend le bord Bj qui les comprend. Ils agissent comme des diffuseurs bidimensionnels (ou 2D).

On notera que la ligne est ici une droite « transversale ». Mais dans une variante de réalisation cette ligne pourrait présenter au moins une courbure.

Ces godrons ST2 peuvent être des semi-cylindres circulaires, comme illustré non limitativement sur les figures 3 et 6. Mais il pourrait s'agir de semi-cylindres elliptiques, par exemple.

On notera que les secondes structures tridimensionnelles ST2 pourraient être des diffuseurs tridimensionnels (ou 3D), comme par exemple des semi-billes, au lieu d'être des diffuseurs bidimensionnels (ou 2D).

On notera également, comme illustré non limitativement sur la figure 4, que la paroi PT et le second bord de liaison B4 peuvent être masqués par une paroi auxiliaire PA. Cette paroi auxiliaire PA peut éventuellement faire partie du dispositif d'éclairage D. Mais dans l'application ici considérée elle pourrait faire partie du bloc optique.

On notera également que le dispositif d'éclairage D pourrait être utilisé de façon symétrique à celle décrite ci-avant. En effet, les photons pourraient utiliser un trajet inverse. Dans ce cas, les photons sont introduits dans les bords B1 à B3 et transférés dans le second bord de liaison B4 par réflexions totales internes, notamment sur les premières structures tridimensionnelles ST1, avant d'être transférés dans l'éventuelle paroi PT pour déboucher au niveau de son extrémité EP. Cela permettrait de rétroéclairer un autre élément du bloc optique, comme par exemple une parabole située derrière le dispositif d'éclairage D.

On notera également que le dispositif d'éclairage D pourrait être couplé à une autre fonction située derrière lui, par exemple de manière à permettre la réalisation d'un bloc optique plus petit.

## Revendications

1. Bloc optique pour véhicule automobile comprenant au moins un dispositif d'éclairage (D) comprenant un écran (EC), comportant des faces avant (FV) et arrière (FR) et délimité par des bords (Bj) comprenant des extrémités (Eji) opposées, et au moins une source de lumière (Sk) générant des photons, **caractérisé en ce que** seul au moins un desdits bords (Bj) comprenant sur la face arrière (FR) des premières structures tridimensionnelles (ST1), est propre à réfléchir totalement des photons, issus de l'une de ses extrémités (Eji) ou d'une partie centrale, vers la face avant (FV) afin qu'ils sortent par lui (Bj) ; ledit seul bord (Bj) apparaissant comme éclairé ou illuminé sur la face avant (FV).

2. Bloc optique selon la revendication 1, **caractérisé en ce qu'**en présence d'un écran (EC) comprenant deux bords latéraux (B1, B2) reliés par deux bords de liaison (B3, B4), l'un au moins desdits bords latéraux (B1, B2) comprend sur sa face arrière (FR) des premières structures tridimensionnelles (ST1) constituant des prismes propres à réfléchir totalement des photons selon une première direction générale sensiblement perpendiculaire à ladite face avant (FV) ; les photons étant reçus par un (B4) des bords de liaison (B3, B4) dépourvu de structures tridimensionnelles (ST1).

3. Bloc optique selon l'une des revendications 1 et 2, **caractérisé en ce qu'**en présence d'un écran (EC) comprenant deux bords latéraux (B1, B2) reliés par deux bords de liaison (B3, B4), l'un au moins desdits bords de liaison (B3, B4) comprend sur sa face arrière (FR) des premières structures tridimensionnelles (ST1) constituant des godrons parallèles entre eux, sensiblement perpendiculaires à une ligne suivant laquelle il s'étend, et inclinés vers sa face avant (FV) selon un angle aigu ; les photons étant reçus par un (B4) des bords de liaison (B3, B4) dépourvu de structures tridimensionnelles (ST1) .

4. Dispositif selon l'une des revendications 1 à 3, **caractérisé en ce que** le ou les bords (B1-B3), ayant une face arrière (FR) munie de premières structures tridimensionnelles (ST1), comprend en outre sur sa face avant (FV) des secondes structures tridimensionnelles (ST2) propres à modifier une trajectoire de sortie de photons incidents en fonction d'un lieu où survient cette incidence.

5. Bloc optique selon la revendication 4, **caractérisé en ce que** lesdites secondes structures tridimensionnelles (ST2) constituent des godrons sensiblement parallèles entre eux et à une ligne suivant laquelle s'étend ledit bord (Bj) qui les comprend ; les photons étant reçus par un (B4) des bords de liaison (B3, B4) dépourvu de structures tridimensionnelles (ST1).

6. Bloc optique selon l'une des revendications 3 et 5, **caractérisé en ce que** lesdits godrons (ST1, ST2) sont des semi-cylindres circulaires.

7. Bloc optique selon l'une des revendications 2 à 6, **caractérisé en ce que** l'un (B4) desdits bords de liaison (B3, B4) est dépourvu de premières structures tridimensionnelles (ST1) et, d'une part, prolongé vers l'arrière par une paroi (PT) propre à recevoir des photons de chaque source de lumière (Sk) et à transférer vers lui (B4) ces photons reçus sensiblement selon une seconde direction générale, et, d'autre part, agencé de manière à réfléchir vers lesdits bords latéraux (B1, B2) lesdits photons transférés.

8. Bloc optique selon la revendication 7, **caractérisé en ce que** ladite paroi (PT) comprend une extrémité (EP) opposée audit bord de liaison (B4) qu'elle (PT) prolonge, inclinée et présentant au moins une zone (ZR) ayant un profil parabolique propre à réfléchir totalement des photons, issus d'une source de lumière (Sk) associée, vers ce bord de liaison (B4) selon ladite seconde direction générale.

## Patentansprüche

1. Optische Einheit für ein Kraftfahrzeug, umfassend mindestens eine Beleuchtungsvorrichtung (D), die einen Schirm (EC) umfasst, der eine Vorder- (FV) und Rückseite (FR) aufweist und durch Kanten (Bj) begrenzt ist, die gegenüberliegende Enden (Eji) umfassen, und mindestens eine Photonen erzeugende Lichtquelle (Sk), **dadurch gekennzeichnet, dass** nur mindestens eine der Kanten (Bj) auf der Rückseite (FR) erste dreidimensionale Strukturen (ST1) umfasst, die geeignet sind, Photonen, die von einem seiner Enden (Eji) oder einem zentralen Teil stammen, zu der Vorderseite (FV) total zu reflektieren, so dass sie durch sie (Bj) austreten; wobei nur die Kante (Bj) oder auf der Vorderseite (FV) beleuchtet oder bestrahlt zu sein scheint.

2. Optische Einheit nach Anspruch 1, **dadurch gekennzeichnet, dass** bei Vorhandensein eines Bildschirms (EC), der zwei Seitenkanten (B1, B2) umfasst, die durch zwei Verbindungskanten (B3, B4) verbunden sind, mindestens eine der Seitenkanten (B1, B2) auf ihrer Rückseite (FR) erste dreidimensionale Strukturen (ST1) umfasst, die einen Prisma bilden, der geeignet ist, Photonen in einer ersten allgemeinen Richtung im Wesentlichen senkrecht zu der Vorderseite (FV) total zu reflektieren; wobei die Photonen von einer (B4) der Verbindungskanten (B3, B4) empfangen werden, die frei von dreidimensionalen Strukturen (ST1) ist.

3. Optische Einheit nach einem der Ansprüche 1 und 2, **dadurch gekennzeichnet, dass** bei Vorhandensein eines Schirms (EC), der zwei Seitenkanten (B1, B2) umfasst, die durch zwei Verbindungskanten (B3, B4) verbunden sind, mindestens eine der Verbindungskanten (B3, B4) auf ihrer Rückseite (FR) erste dreidimensionale Strukturen (ST1) umfasst, die Godronierungen bilden, die zueinander parallel sind, im Wesentlichen senkrecht zu einer Linie, entlang der sie sich erstrecken und in einem spitzen Winkel zu seiner Vorderseite (FV) geneigt sind; wobei die Photonen von einer (B4) der Verbindungskanten (B3, B4) empfangen werden, die frei von dreidimensionalen Strukturen (ST1) ist.

4. Optische Einheit nach einem der Ansprüche 1 bis 3, **dadurch gekennzeichnet, dass** der oder die Kanten (B1-B3) eine Rückseite (FR) haben, die mit ersten dreidimensionalen Strukturen (ST1) versehen ist, ferner an seiner Vorderseite (FV) zweite dreidimensionale Strukturen (ST2) aufweist, die geeignet sind, eine Ausgangsbahn der einfallenden Photonen als Funktion eines Orts zu modifizieren, an dem dieser Vorfall auftritt.

5. Optische Einheit nach Anspruch 4, **dadurch gekennzeichnet, dass** die zweiten dreidimensionalen Strukturen (ST2) Godronierungen bilden, die im Wesentlichen zueinander und zu einer Linie parallel sind, entlang der sich die Kante (Bj) erstreckt, die sie umfasst; wobei die Photonen von einer (B4) der Verbindungskanten (B3, B4) empfangen werden, die frei von dreidimensionalen Strukturen (ST1) ist.

6. Optische Einheit nach einem der Ansprüche 3 und 5, **dadurch gekennzeichnet, dass** die Godronierungen (ST1, ST2) kreisförmige Halbzylinder sind.

7. Optische Einheit nach einem der Ansprüche 2 bis 6, **dadurch gekennzeichnet, dass** eine (B4) dieser Verbindungskanten (B3, B4) frei von ersten dreidimensionalen Strukturen (ST1) ist und einerseits nach hinten durch eine Wand (PT) verlängert ist, die geeignet ist, um Photonen von jeder Lichtquelle (Sk) zu empfangen und diese Photonen zu ihr (B4) zu übertragen, die im Wesentlichen in einer zweiten allgemeinen Richtung empfangen werden, und andererseits so angeordnet ist, um die übertragenen Photonen zu den seitlichen Kanten (B1, B2) zu reflektieren.

8. Optische Einheit nach Anspruch 7, **dadurch gekennzeichnet, dass** die Wand (PT) ein Ende (EP) aufweist, das gegenüber der Verbindungskante (B4) liegt, die sie (PT) verlängert, , die geneigt ist und mindestens eine Zone (ZR) aufweist, die ein parabolisches Profil hat, das geeignet ist, Photonen, die von einer zugehörigen Lichtquelle (Sk) stammen, zu dieser Verbindungskante (B4) in dieser zweiten Richtung vollständig zu reflektieren.

## Claims

1. Optical unit for a motor vehicle comprising at least one lighting device (D) comprising a screen (EC), including front (FV) and rear (FR) sides delimited by edges (Bj) having opposite ends (Eji), and at least one photon-generating light source (Sk), **characterised in that** only at least one of said edges (Bj) comprising, on the rear side (FR), first three-dimensional structures (ST1), is suitable for fully reflecting the photons originating from one of the ends (Eji) thereof or from a central portion, towards the front side (FV) so that they exit via said edge (Bj), said only edge (Bj) appearing as being lit or illuminated on the front side (FV).

2. Optical unit according to claim 1, **characterised in that** in the presence of a screen (EC) comprising two side edges (B1, B2) connected by two connecting edges (B3, B4), at least one of said side edges (B1, B2) comprises, on the rear side (FR) thereof, first three-dimensional structures (ST1) constituting prisms suitable for fully reflecting the photons in a first general direction substantially perpendicular to said front side (FV), whereby the photons are received by one (B4) of the connecting edges (B3, B4) devoid of three-dimensional structures (ST1).

3. Optical unit according to either claim 1 or claim 2, **characterised in that** in the presence of a screen (EC) comprising two side edges (B1, B2) connected by two connecting edges (B3, B4), at least one of said connecting edges (B3, B4) comprises, on the rear side (FR) thereof, first three-dimensional structures (ST1) constituting gadroons parallel to one another, substantially perpendicular to a line along which it extends, and inclined towards the front side (FV) thereof at an acute angle, whereby the photons are received by one (B4) of the connecting edges (B3, B4) devoid of three-dimensional structures (ST1).

4. Device according to one of claims 1 to 3, **characterised in that** the one or more edges (B1-B3), having a rear side (FR) provided with three-dimensional structures (ST1), further comprises, on the front side (FV) thereof, second three-dimensional structures (ST2) suitable for modifying an incident photon output trajectory according to a place at which said incidence occurs.

5. Optical unit according to claim 4, **characterised in that** said second three-dimensional structures (ST2) constitute gadroons substantially parallel to one another and to a line along which said edge (Bj) comprising said structures extends, whereby the photons are received by one (B4) of the connecting edges (B3, B4) devoid of three-dimensional structures (ST1).

6. Optical unit according to one of claims 3 and 5, **characterised in that** said gadroons (ST1, ST2) are circular semi-cylinders.

7. Optical unit according to one of claims 2 to 6, **characterised in that** one (B4) of said connecting edges (B3, B4) is devoid of first three-dimensional structures (ST1) and, on the one hand, extended backwards by a wall (PT) suitable for receiving photons from each light source (Sk) and for transferring thereto (B4) said received photons substantially in a second general direction, and, on the other hand, arranged so as to reflect said transferred photons towards said side edges (B1, B2).

8. Optical unit according to claim 7, **characterised in that** said wall (PT) comprises an end (EP) opposite said connected edge (B4) that it (PT) extends, that is inclined and that has at least one area (ZR) having a parabolic profile suitable for fully reflecting photons, originating from an associated light source (Sk), towards said connecting edge (B4) in said second general direction.
